# EUROPÄISCHE PATENTSCHRIFT

(11) **EP 0 605 856 B1**
(45) Veröffentlichungstag und Bekanntmachung des Hinweises auf die Patenterteilung: **28.08.1996**
(21) Anmeldenummer: 93120857.3
(22) Anmeldetag: 23.12.1993
(51) Int. Cl.: C08F 8/04, C08F 8/14

(54) **Verfahren zur Herstellung von p-Hydroxystyrolpolymerisaten und deren Verwendung**
Process for the manufacture of p-hydroxystyrene polymers and use thereof
Procédé de préparation de polymères de p-hydroxystyrène et leur application

(30) Priorität: 07.01.1993 DE 4300209
(43) Veröffentlichungstag der Anmeldung: 13.07.1994
(73) Patentinhaber: BASF Aktiengesellschaft, 67063 Ludwigshafen (DE)
(72) Erfinder: Schwalm, Reinhold, Dr., D-67157 Wachenheim (DE); Funhoff, Dirk, Dr., D-69126 Heidelberg (DE); Binder, Horst, D-68623 Lampertheim (DE); Smuda, Hubert, Dr., D-69126 Heidelberg (DE)

(56) Entgegenhaltungen:
- EP-A- 0 466 359
- DE-A- 2 618 145
- DE-A- 3 519 639
- PATENT ABSTRACTS OF JAPAN vol. 13, no. 326 (C-620)(3674) 24. Juli 1989 & JP-A-01 103 604 (MARUZEN PETROCHEM CO., LTD.) 20. April 1989

## Beschreibung

Die Erfindung betrifft ein Verfahren zur Herstellung von p-Hydroxystyrolpolymerisaten durch radikalische Polymerisation von p-Hydroxystyrol dessen phenolische Hydroxylgruppe durch eine säurekatalytisch abspaltbare Gruppe geschützt ist, oder von Gemischen derart geschützten p-Hydroxystyrols mit anderen polymerisierbaren ethylenisch ungesättigten organischen Verbindungen in Gegenwart eines inerten organischen Lösungsmittels und eines peroxidischen Initiators bis zu einem Polymerisationsumsatz von über 95 %, gegebenenfalls Verdünnung der Polymerisatlösung mit einem Alkohol, und anschließende Behandlung des Polymerisats mit einer Säure sowie eine bestimmten Nachbehandlung.

Die erfindungsgemäß erhaltenen p-Hydroxystyrolpolymerisate eignen sich besonders vorteilhaft für die Deep-UV-Lithographie.

Das Monomere 4-Hydroxystyrol ist selbst bei tiefen Temperaturen und unter Luftausschluß nur kurze Zeit haltbar. Die radikalische Polymerisation von p-Hydroxystyrol führt nur zu Poly-4-hydroxystyrol von niedrigem Molekulargewicht [vgl. R.C. Sovish, J. Org. Chem., 24, 1345 (1959)].

Höhermolekulare Poly-p-hydroxystyrole werden daher bevorzugt über Poly-4-acetoxystyrol und dessen nachfolgender alkalischer oder saurer Verseifung hergestellt [vgl. La Chimica E L'Industria, Vol. 47, No. 5, Maggio 1965, S 493-96; US 2,276,138; EP 252 706].

Poly-p-hydroxystyrol eignet sich besonders als polymeres Bindemittel für Photoresists im kurzwelligen (deep-) UV Bereich. Eine besondere Anforderung an das Bindemittel ist dessen hohe Transparenz bzw. niedrige Absorption im Wellenlängenbereich von 240 bis 260 nm. Um eine möglichst hohe Transparenz zu erreichen, sind bereits eine Reihe von Verfahren beschrieben:

In EP-A 401 499 werden unter anderem hydrogenierte Polyvinylphenole beschrieben; in DE-3519639-C2 wird ein Verfahren zur Wärmebehandlung des Polymeren in Gegenwart von Aminen und in EP-A 466 359 wird ein an sich bekanntes Verfahren zur Polymerisation in alkoholischer Lösung beschrieben, wobei Initiatoren selektiert werden, welche nur wenig absorbieren, sowie ein säurekatalysierter Umesterungsprozeß. Alle diese Verfahren sind noch mit Nachteilen behaftet, so ist die Transparenz der Polymeren nach EP-A 401 499 ausreichend, jedoch hängt die Alkalilöslichkeit der Polymeren sehr stark vom Hydrierungsgrad ab. Die Polymeren nach DE-A 3519639 absorbieren noch sehr stark und im Falle der EP-A-466 359 ist die Prozeßführung sehr schwierig, denn je nach Sauerstoffgehalt der Lösung ergeben Oxidationsprozesse einen unterschiedlichen Gehalt an absorbierenden Spezies. Es besteht also weiterhin ein Bedarf an Poly-p-hydroxystyrolen mit niedriger Absorption im kurzwelligen UV-Bereich von 240 bis 260 nm.

Aufgabe der vorliegenden Erfindung war es, ein Verfahren zur Herstellung von Hydroxystyrol-Polymeren mit niedriger Absorption im Wellenlängenbereich von 240 bis 260 nm zur Verfügung zu stellen.

Erfindungsgemäß gelingt dies mit einem Verfahren zur Herstellung von Hydroxystyrol-Polymeren, bei dem ein mit einer säurekatalytisch abspaltbaren Gruppe geschütztes Hydroxystyrol in einem Lösungsmittel in Gegenwart eines peroxidischen Initiators bis zu einem Umsatz größer 95% polymerisiert wird, die Lösung gegebenenfalls mit einem Alkohol verdünnt und in Gegenwart eines Reduktionsmittels mit Hilfe von katalytischen Mengen Säure behandelt wird, so daß Hydroxystyrolpolymere erhalten werden.

Gegenstand der vorliegenden Erfindung ist daher ein Verfahren zur Herstellung von p-Hydroxystyrolpolymerisaten durch radikalische Polymerisation von p-Hydroxystyrol, dessen phenolische Hydroxylgruppe durch eine säurespaltbare Gruppe geschützt ist, oder von Gemischen derart geschützten p-Hydroxystyrols mit anderen polymerisierbaren ethylenisch ungesättigten organischen Verbindungen bis zu einem Polymerisationsumsatz von über 95 % und anschließende Behandlung des Polymerisats mit einer Säure, das dadurch gekennzeichnet ist, daß das Polymerisat während oder nach der Säurebehandlung mit einem phosphorhaltigen Reduktionsmittel behandelt wird. Bevorzugt werden unterphosphorige Säure oder Derivate, insbesondere Ester dieser Säuren. Zur erfindungsgemäßen Herstellung von p-Hydroxystyrolcopolymerisaten werden in den Gemischen von geschütztem p-Hydroxystyrol mit anderen polymerisierbaren ethylenisch ungesättigten organischen Verbindungen solche Comonomere eingesetzt, die im Wellenlängenbereich von 240 bis 280 nm keine oder nur eine geringe Absorption aufweisen.

Zum erfindungsgemäßen Verfahren ist im einzelnen folgendes auszuführen.

Als p-Hydroxystyrole, dessen phenolische Hydroxylgruppe durch eine säurespaltbare Gruppe geschützt ist, d.h. als geschütztes Hydroxystyrol-Monomer mit säurekatalytisch abspaltbaren Gruppen kommen Trialkylsilyloxystyrol, wie Trimethylsilyloxystyrol, Triethylsilyloxystyrol, t-Butyldimethylsilyloxystyrol, t-Butoxystyrol, p-Acetoxystyrol, Tetrahydropyranyloxystyrol, Tetrahydrofuranyloxystyrol, Trityloxystyrol, t-Butoxycarbonyloxystyrol sowie andere Hydroxystyrol- Monomere mit in "Protective Groups in Organic Synthesis 2. Edition, T.W. Greene and P.G.M. Wuts, John Wiley & Sons, New York 1991, in Kapitel 2 (Protection for the Hydroxylgroup) genannten saurekatalytisch abspaltbaren Schutzgruppen in Frage.

Als polymerisierbare ethylenisch ungesättigte organische Verbindungen, die als Comonomere für die erfindungsgemäße Herstellung von p-Hydroxystyrolcopolymerisaten in Frage kommen, eignen sich solche, die im Wellenlängenbereich von 240 bis 280 nm nicht oder nur wenig absorbieren, wie z.B. 3- oder 5-Alkyl-4-hydroxystyrol, 3,5-Dialkyl-4-hydroxystyrol, (Meth)acrylsäure, (Meth)acrylsäurealkylester, Acrylnitril, Alkylvinylether und andere Vinylmonomere.

Die Polymerisation wird zweckmäßigerweise in einem inerten organischen Lösungsmittel durchgeführt.

Als Lösungsmittel für die Polymerisation des geschützten Hydroxystyrol-Monomeren kommen dabei alle Lösungsmittel in Frage, welche Monomere und gebildetes Polymer bei Raumtemperatur lösen, jedoch auch solche, welche lediglich bei der jeweiligen Polymerisationstemperatur zwischen 60°C und 120°C das Polymer lösen oder anquellen, ohne daß sich größere Aggregate bilden. Das sind allein oder in Kombination mit anderen beispielsweise unpolare Lösungsmittel, wie Benzol, Chloroform, sowie mittelpolare Lösungsmittel, wie Tetrahydrofuran, Dioxan, Ketone, wie Methylethylketon, Aceton oder Alkohole, wie Methanol, Ethanol, Propanol oder Isopropanol.

Als Polymerisationskatalysatoren für die radikalische Polymerisation kommen insbesondere peroxidische Initiatoren in Frage, bevorzugt aliphatische Peroxyde, beispielsweise Decanoylperoxyd, t-Butylperoxy-2-ethylhexanoat, Di-n-propyl-peroxydicarbonat, Di-(2-ethylhexyl)-peroxydicarbonat, t-Amylperoxydicarbonat, Di-(2-ethylhexyl)-peroxydicarbonat, t-Amylperoxy-pivalat, t-Butylperoxy-pivalat, t-Butyl-peroxy-isobutyrat u.a.m.

Als Säuren zur Abspaltung der Schutzgruppen der OH-Gruppen des p-Hydroxystyrolcopolymerisats kommen besonders anorganische Säuren, wie Schwefelsäure, Salzsäure und Phosphorsäure, sowie organische Säuren, wie Methansulfonsäure, Trifluormethansulfonsäure und p-Toluolsulfonsäure in Frage. Die als Reduktionsmittel wirkenden Säuren Phosphorige und Hypophosphorige Saure kommen nicht in Betracht, da sie allein die Abspaltung nicht im gewünschten Maß katalysieren.

Als erfindungsgemäß einzusetzende phosphorhaltige Reduktionsmittel kommen insbesondere solche, die ein Reduktionspotential < 0,3 V gegen Normalwasserstoffelektrode aufweisen, in Frage, wie Alkaliphosphite, Phosphorigsäureester, z.B. Phosphorigsäuretrialkyl-, Phosphorigsäure-triaryl- und Phosphorigsäure-dialkyl- und diarylester sowie Phosphorigsäure und Hypophosphorige Säure, wobei als Alkylgruppen der Phosphorigsäureester solche mit 1 bis 8, vorzugsweise 1 bis 4 Kohlenstoffatomen und als Arylgruppen unsubstituierte oder mit Halogen, wie z.B. chlorsubstituierte Arylgruppen, beispielsweise Phenyl- oder halogensubstituierte Phenylgruppen in Frage kommen.

Beim erfindungsgemäßen Verfahren wird zunächst ein mit einer säurekatalytisch abspaltbaren Gruppe geschütztes p-Hydroxystyrol, gegebenenfalls im Gemisch mit weiteren Monomeren in Gegenwart eines Lösungsmittels und vorzugsweise eines aliphatischen peroxidischen Initiators polymerisiert und dann die säurelabile Schutzgruppe in Gegenwart einer katalytischen Menge Säure und eines Reduktionsmittels, sowie gegebenenfalls eines Alkohols abgespaltet.

Bei einer bevorzugten Ausführungsform des Verfahrens werden die Monomeren und das Lösungsmittel, bevorzugt ein Alkohol, gemischt und auf Rückflußtemperatur aufgeheizt. Dann gibt man eine Lösung des Initiators im entsprechenden Lösungsmittel zu und polymerisiert solange, gegebenenfalls unter Nachdosierung von Initiatorlösung, bis der Restmonomergehalt in der Lösung unter 5% beträgt. Die Initiatormenge kann je nach gewünschtem Molekulargewicht zwischen 0,5 Mol% und 8 Mol%, bezogen auf eingesetzte Monomere, liegen. Man erhält so Molekulargewichte zwischen Mw 5000 und 50000.

Nach der Polymerisation gibt man zwischen 1 und 50 %, bezogen auf die Lösung, einer Säure, bevorzugt Salzsäure, sowie zwischen 1 und 50 % eines phosphorhaltigen Reduktionsmittels, bevorzugt phosphorige Säure, hypophosphorige Säure oder Phosphorigsäure-diphenylester, zu und läßt bei erhöhter Temperatur solange reagieren, bis die säurelabilen Schutzgruppen nahezu vollständig abgespalten sind. Um eine genügende Alkalilöslichkeit zu erreichen, werden Abspaltungsgrade größer 80 % angestrebt.

Die so erhaltenen p-Hydroxystyrol-Polymeren werden anschließend in Wasser gefällt und bei Temperaturen unterhalb 35°C im Vakuum getrocknet.Die erfindungsgemäßen Polymere zeichnen sich durch eine niedrige optische Dichte im Wellenlängenbereich von 240 bis 280 nm aus. Besonders interessant für die Anwendung in der Deep-UV Lithographie ist die Laserwellenlänge 248 nm, bei der die Messung stellvertretend für den Wellenlängenbereich angegeben ist.

Diese Polymeren sind daher besonders geeignet für die Anwendung in der Deep-UV Lithographie. Diese Polymeren kann man gegebenenfalls noch durch teilweise Funktionalisierung mit säurelabilen Gruppen modifizieren.

Die Messung der UV Spektren zur Ermittlung der Absorption (optischen Dichte) erfolgte auf übliche Weise. Dazu wurden die Absorptionsspektren im UV-Bereich unter Verwendung einer Zelle mit 1 cm Dicke bei einer Konzentration der Polymerprobe von 0,1 g/Liter Methanol gemessen.

Die in den Beispielen genannten Teile und Prozente sind, soweit nicht anders angegeben, Gewichtsteile bzw. Gewichtsprozente.

### Beispiel 1

85 Teile p-tert.-Butoxystyrol werden in 80 Teilen Isopropanol gelöst und zum Rückfluß erhitzt. Dazu tropft man während einer Stunde eine Lösung von 5 Teilen tert.-Butyl-perpivalat in 10 Teilen Isopropanol und polymerisiert weitere 7 Stunden, gibt dann eine Lösung von 1 Teil tert.-Butyl-perpivalat in 1 Teil Isopropanol zu und läßt weitere 8 Stunden am Rückfluß reagieren. Der Restmonomergehalt ist kleiner als 5%. Die Lösung wird mit Methanol verdünnt, so daß eine ca. 50%ige Polymerlösung entsteht.

Zu je 20 Teilen dieser Polymerlösung gibt man a) 1 Teil 37%ige Salzsäure bzw. b) 1 Teil 37 %ige Salzsäure und 1 Teil hypophosphorige Säure. Diese Lösungen werden 4 Stunden am Rückfluß erhitzt und anschließend in Wasser gefällt und getrocknet. Die IR-Spektren zeigen vollständige Abspaltung der tert.-Butoxyschutzgruppe. Die optischen Dichten (Absorption) bei 248 nm betragen bei dem Polymer erhalten nach Methode a) 0,28, bei dem Polymer erhalten nach Methode b) 0,16.

### Beispiel 2

1200 Teile p-tert.-Butoxystyrol werden in 1625 Teilen Isopropanol gelöst und zum Rückfluß erhitzt. Während 1 Stunde tropft man eine Lösung von 75 Teilen t-Butyl-perpivalat in 120 Teilen Isopropanol zu und polymerisiert weitere 7 Stunden. Zu je 100 Teilen dieser Polymerlösung gibt man a) 10 Teile 37%ige Salzsäure, b) 10 Teile 37%ige Salzsäure und 5 Teile Phosphorigsäurediphenylester sowie c) 10 Teile 37%ige Salzsäure und 10 Teile Phosphorigsäurediphenylester und läßt 14 Stunden bei 75°C reagieren. Anschließend werden die Polymerlösungen in Wasser gefällt und getrocknet. Die IR Spektren zeigen vollständige Abspaltung der tert.-Butoxyschutzgruppe. Die Absorption der Polymeren bei 248 nm sind bei a) 0,27, bei b) 0,22 und bei c) 0,19.

### Beispiel 3

162 Teile p-Acetoxystyrol werden in 180 Teilen Isopropanol gelöst und zum Rückfluß erhitzt. Innerhalb 15 Minuten läßt man eine Lösung von 11,6 Teilen tert. Butyl-perpivalat in 40 Teilen Isopropanol zulaufen und polymerisiert weitere 7 Stunden am Rückfluß, gibt danach eine Lösung von 2,5 Teilen tert.-Butyl-perpivalat in 10 Teilen Isopropanol zu und hält weitere 4 Stunden am Rückfluß.

Dann verdünnt man mit 100 Teilen Methanol, gibt 10 teile 37%ige Salzsäure und 0,63 Teile phosphorige Säure zu und erhitzt 2 Stunden am Rückfluß. Das IR Spektrum zeigt vollständige Abspaltung der Acetoxyschutzgruppe. Die optische Dichte bei 248 nm beträgt 0,15. Eine Vergleichsprobe ohne Zusatz der phosphorigen Säure weist eine optische Dichte von 0,17 auf.

### Beispiel 4

Es wird wie in Beispiel 3 verfahren, jedoch werden anstatt 0,63 Teile phosphorige Säure 0,08 Teile hypophosphorige Säure zugegeben. Die optische Dichte beträgt 0,16.

## Patentansprüche

1. Verfahren zur Herstellung von p-Hydroxystyrolpolymerisaten durch radikalische Polymerisation von p-Hydroxystyrol, dessen phenolische Hydroxylgruppe durch eine säurespaltbare Gruppe geschützt ist, oder von Gemischen derart geschützten p-Hydroxystyrols mit anderen polymerisierbaren ethylenisch ungesättigten organischen Verbindungen bis zu einem Polymerisationsumsatz von über 95 % und anschließende Behandlung des Polymerisats mit einer Säure, dadurch gekennzeichnet, daß das Polymerisat während oder nach der Säurebehandlung mit einem phosphorhaltigen Reduktionsmittel behandelt wird.

2. Verfahren nach Anspruch 1, dadurch gekennzeichnet, daß das phosphorhaltige Reduktionsmittel ein Reduktionspotential von < -0,3 V gegen Normalwasserstoffelektrode aufweist.

3. Verfahren nach Anspruch 1, dadurch gekennzeichnet, daß als phosphorhaltiges Reduktionsmittel phosphorige oder unterphosphorige Säure oder Derivate dieser Säuren eingesetzt werden.

4. Verfahren nach einem der vorhergehenden Ansprüche, dadurch gekennzeichnet, daß in den Gemischen von geschützten p-Hydroxystyrol mit anderen polymerisierbaren ethylenisch ungesättigten organischen Verbindungen als letztere solche eingesetzt werden, die im Wellenlängenbereich von 240 bis 280 nm keine oder nur eine geringe Absorption aufweisen.

5. Verfahren nach einem der vorhergehenden Ansprüche, dadurch gekennzeichnet, daß man
(a) ein mit einer säurekatalytisch abspaltbaren Gruppe geschütztes Hydroxystyrol, gegebenenfalls im Gemisch mit weiteren Monomeren, in Gegenwart eines Lösungsmittels und eines aliphatischen peroxidischen Initiators polymerisiert und
(b) die säurelabile Schutzgruppe in Gegenwart einer katalytischen Menge Säure und eines phosphorhaltigen Reduktionsmittels sowie ggf. eines Alkohols abspaltet.

6. Verfahren nach einem der vorhergehenden Ansprüche, dadurch gekennzeichnet, daß als geschützte Hydroxystyrole Trimethylsilyloxystyrol, p-Acetoxystyrol, t-Butoxystyrol und/oder Tetrahydropyranyloxystyrol eingesetzt werden.

7. Verfahren nach einem der vorhergenden Ansprüche, dadurch gekennzeichnet, daß als Comonomere weitere Monomere aus der Gruppe 3-Methyl-4-Acetoxystyrol, 3,5-Dimethyl-4-acetoxystyrol, Acrylsäure, Methacrylsäure, Acrylsäureester, Methacrylsäureester und/oder Styrol eingesetzt werden.

8. Verfahren nach Anspruch 5, dadurch gekennzeichnet, daß als Lösungsmittel Alkohole wie Methanol, Ethanol, Propanol oder Isopropanol eingesetzt werden.

9. Verfahren nach Anspruch 5, dadurch gekennzeichnet, daß als aliphatischer peroxidischer Initiator t-Butylperpivalat eingesetzt wird.

## Claims

1. A process for the preparation of a p-hydroxystyrene polymer by free radical polymerization of p-hydroxystyrene, whose phenolic hydroxyl group is protected by an acid-cleavable group, or of a mixture of p-hydroxystyrene protected in this manner with other polymerizable ethylenically unsaturated organic compounds to a polymerization conversion of more than 95% and subsequent treatment of the polymer with an acid, wherein the polymer is treated with a phosphorus-containing reducing agent during or after the acid treatment.

2. A process as claimed in claim 1, wherein the phosphorus-containing reducing agent has a reduction potential of < -0.3 V against a standard hydrogen electrode.

3. A process as claimed in claim 1, wherein the phosphorus-containing reducing agent used is phosphorous or hypophosphorous acid or a derivative of one of these acids.

4. A process as claimed in any of the preceding claims, wherein, in the mixture of the protected p-hydroxystyrene with other polymerizable ethylenically unsaturated organic compounds, the said organic compounds used are those which have little or no absorbance in the wavelength range from 240 to 280 nm.

5. A process as claimed in any of the preceding claims, wherein
(a) a hydroxystyrene protected by a group which can be eliminated under acid catalysis, if required as a mixture with further monomers, is polymerized in the presence of a solvent and of an aliphatic peroxide initiator and
(b) the acid-labile protective group is eliminated in the presence of a catalytic amount of an acid and of a phosphorus-containing reducing agent and, if required, of an alcohol.

6. A process as claimed in any of the preceding claims, wherein the protected hydroxystyrene used is trimethylsilyloxystyrene, p-acetoxystyrene, tert-butoxystyrene and/or tetrahydropyranyloxystyrene.

7. A process as claimed in any of the preceding claims, wherein the comonomers used as further monomers are selected from the group consisting of 3-methyl-4-acetoxystyrene, 3,5-dimethyl-4-acetoxystyrene, acrylic acid, methacrylic acid, acrylates, methacrylates and styrene.

8. A process as claimed in claim 5, wherein the solvent used is an alcohol, such as methanol, ethanol, propanol or isopropanol.

9. A process as claimed in claim 5, wherein the aliphatic peroxide initiator used is tert-butyl perpivalate.

## Revendications

1. Procédé de préparation de polymères du p-hydroxystyrène par polymérisation radicalaire d'un p-hydroxystyrène dont le groupe hydroxy phénolique est protégé par un groupe éliminable sous l'action d'un acide, ou de mélanges d'un tel p-hydroxystyrène protégé avec d'autres composés organiques à insaturation éthylénique polymérisables jusqu'à un taux de polymérisation supérieur à 95 % et traitement subséquent du polymère à l'aide d'un acide, caractérisé par le fait que, durant ou après le traitement par un acide, le polymère est traité par un agent réducteur phosphoré.

2. Procédé selon la revendication 1, caractérisé par le fait que l'agent réducteur phosphoré a un potentiel de réduction inférieur à -0,3 V par rapport à l'électrode normale à hydrogène.

3. Procédé selon la revendication 1, caractérisé par le fait que l'agent réducteur phosphoré est l'acide phosphoreux ou l'acide hypophosphoreux ou un dérivé de ces acides.

4. Procédé selon l'une des revendications qui précédent, caractérisé par le fait que, dans les mélanges d'un p-hydroxystyrène protégé avec d'autres composés organiques à insaturation éthylénique polymérisables, ces derniers sont des composés qui n'absorbent pas ou n'ont qu'une légère absorption dans l'intervalle des longueurs d'ondes de 240 à 280 nm.

5. Procédé selon une des revendications qui précèdent, caractérisé par le fait que
(a) on polymérise un hydroxystyrène protégé par un groupe éliminable sous catalyse acide, éventuellement en mélange avec d'autres monomères, en présence d'un solvant et d'un inducteur peroxydique aliphatique et
(b) on scinde le groupe protecteur instable aux acides en présence d'une quantité catalytique d'un acide et d'un agent réducteur phosphoré et le cas échéant d'un alcool.

6. Procédé selon une des revendications qui précèdent, caractérisé par le fait que l'on utilise, en tant qu'hydroxystyrènes protégés, le triméthylsilyloxystyrène, le p-acétoxystyrène, le tert-butoxystyrène et/ou le tétrahydropyrannyloxystyrène.

7. Procédé selon une des revendications qui précèdent, caractérisé par le fait que l'on utilise, en tant que comonomères, d'autres monomères du groupe du 3-méthyl-4-acétoxystyrène, du 3,5-diméthyl-4-acétoxystyrène, de l'acide acrylique, de l'acide méthacrylique, des esters acryliques, des esters méthacryliques et/ou du styrène.

8. Procédé selon la revendication 5, caractérisé par le fait que l'on utilise, en tant que solvants, des alcools tels que le méthanol, l'éthanol, le propanol et l'isopropanol.

9. Procédé selon la revendication 5, caractérisé par le fait que l'on utilise, en tant qu'inducteur peroxydique aliphatique, le perpivalate de tert-butyle.
